## Europäisches Patentamt

## European Patent Office

## Office européen des brevets

(11) Publication number: **0 114 036 B1**

(12) **EUROPEAN PATENT SPECIFICATION**

(45) Date of publication of patent specification: **04.11.87**

(51) Int. Cl.⁴: **A 01 M 7/00, B 05 B 3/14**

(21) Application number: **83830266.9**

(22) Date of filing: **13.12.83**

(54) **Crop-spraying apparatus.**

(30) Priority: **12.01.83 IT 4680683**

(43) Date of publication of application:
**25.07.84 Bulletin 84/30**

(45) Publication of the grant of the patent:
**04.11.87 Bulletin 87/45**

(84) Designated Contracting States:
**DE FR GB**

(56) References cited:
**BE-A- 692 455**

(73) Proprietor: **Casotti, Ettore**
**Via Cerreto, 10**
**I-43035 Felino (Parma) (IT)**

(72) Inventor: **Casotti, Ettore**
**Via Cerreto, 10**
**I-43035 Felino (Parma) (IT)**

(74) Representative: **Lanzoni, Luciano**
**c/o BUGNION S.p.A. Viale Trento Trieste, 25**
**I-41100 Modena (IT)**

Courier Press, Leamington Spa, England.

### Description

As is widely known, crop-spraying machinery, equipment or apparatus is utilised in the treatment of crops by application of liquid pesticides, fungicides and weedkillers — the apparatus providing the means by which to transform such liquids into a fine mist or spray, and/or to throw them at or over the crop from a given distance.

Such apparatus is therefore capable of covering a given area with a fine mist or a spray produced by generating pressure and imparting it to the liquid, or by pneumatic means of the kind producing an aerosol or air convection effect — indeed such systems are commonly dubbed 'crop-spraying', 'nebulising', 'aerosol' and so forth, depending on the particular technique employed in forming and administering the fine mist, or droplets produced. Without delving into the various types of equipment or apparatus available, such as fixed, semi-portable, hand-held, pack (carried on the shoulders military-fashion) litter (between two operatives), low-pressure, and so on, it can be stated in basic terms that all available types of apparatus consist of a tank containing whatever liquid is to be administered, a pump, and the spraying element itself — taking the form of nozzles or impellers of varying designs.

One of the many kinds of crop-spraying apparatus which can be obtained is that utilising swinging jets, which throw the liquid from one or more nozzles actuated with swinging movement, such as to cover a basically rectangular area in relatively little time, see e.g. BE—A—692 455.

In practical application, this type of design has not so far been able to claim perfectly uniform distribution of the liquid administered — which in certain cases is a factor of relatively little importance, but which in others, for weed-killers in particular, is especially desirable.

An additional drawback is that flexible hoses commonly utilised may make unwarranted contact one with the other thus giving negative results. Also, apparatus purchased or designed for a given application cannot always be used for spraying a tight or narrow strip of land. One object of the invention described herein is that of improving on crop-spraying apparatus of the type incorporating swinging-nozzles, so as to obtain a uniform distribution, to all intents and purposes.

A further object of the invention is that of arranging the apparatus so as to avoid contact between flexible hoses.

Yet another object of the invention is that of making crop-spraying feasible on tight, or narrow strips of land.

All these objects are realised by the crop-spraying apparatus to which the invention relates, which delivers at least one main jet from a nozzle actuated with swinging motions about a vertical axis and arranged to jointly define a wide arc characterised in that: there is at least one auxiliary nozzle swinging about a vertical axis and designed to define a more central and tighter arc than that covered by said wide arc.

The invention will now be described, by way of example, with the aid of accompanying drawings, in which:

Fig. 1 is a vertical elevation of the apparatus, with certain parts cut away;

Fig. 2 is a schematic view of the mechanism which imparts swinging movement to the nozzles, seen in plan;

Fig. 3 shows the auxiliary nozzle in plan, and in the preferred embodiment as set forth herein;

Fig. 4 shows the entire apparatus fitted up to a tractor together with a tank by means of which the liquid to be sprayed is carried.

With reference to the drawings, 1 denotes a flexible hose through which liquid flowing from the tank passes to a manifold 2.

3, 4 and 5 are cocks controlling the flow of liquid into flexible hoses 6, 7 and 8.

9, 10 and 11 are rigid pipes at whose bottom ends three spray nozzles are fitted: main nozzles 12 and 13, and an auxiliary nozzle 14; each of said pipes being capable of turning about its own axis in either direction.

15 and 16 are gears turning as one with said pipes 9 and 10, whilst 16' denotes a lever-drive disc turning as one with pipe 11.

17 denotes the means of propulsion of the mechanism as illustrated in Fig. 2, which in the preferred embodiment of the invention, is a gear-motor driven by electrical power supplied from the tractor battery.

A further gear 18 mounted to the output shaft of said means of propulsion 17, is connected to one end of a rod 19 whose remaining end connects with a gear denoted 20 (see Fig. 2) — said ends of rod 19 both being hinged via pins 28 and 29.

20' denotes a gear meshing with the aforesaid gear 18 and connected with said lever-drive disc 16' by way of a further rod 21 hinged via pins 30 and 31 at either end and disposed eccentrically, crank-fashion, in the same way as rod 19.

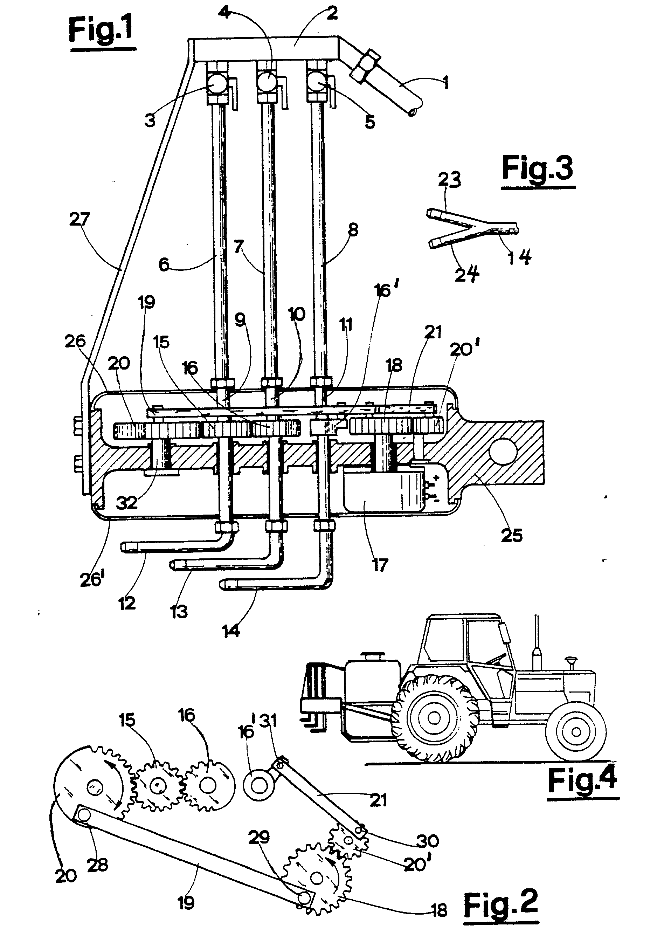

14 denotes the auxiliary nozzle of the apparatus which in the preferred embodiment is branched into two outlets 23 and 24, disposed symmetrically and in the horizontal plane, as can be seen in Fig. 3.

25 denotes the mounting bracket which carries the entire unit, fitted with top and bottom covers 26 and 26' of conventional design and fit.

27 is a stay made fast at one end to bracket 25 and, at the remaining end, to manifold 2 to support the manifold at a given height such that flexible tubes 6, 7 and 8 extending downwardly from the manifold remain parallel one with the other.

It will be observed that branches 23 and 24 of the auxiliary nozzle move within a horizontal plane lying below that within which movement of the lower nozzle 13 of the two main nozzles is brought about.

Transmission of movement to the single nozzles 12, 13 is such that, whilst gear 18 mounted to output shaft 17 will continue rotating in the one direction, gear 20 is caused to oscillate back and forth by virtue of the rod-and-crank arrangement incorporating rod 19 and its two off-centred hinge pins 28 and 29.

At the same time, gear 18 also meshes with gear 20' and thus imparts swinging back-and-fourth motion by way of rod 21 and pins 30 and 31 to the lever of drive-disc 16' thus causing pipe 11 to oscilate therewith as one, and set up the desired degree of swing of nozzle 14. The combination of ratios built in to the mechanism thus composed is such that nozzles 12 and 13 will swing back and fourth in alternation between points approximately 185° apart and located symmetrically with respect to centre, whilst nozzle 14 will swing likewise symmetrically with respect to centre, but in this instance between points approximately 60° to 80° apart.

A variation on the embodiment thus described would be that of having a single nozzle 14 in place of the more desirable branched nozzle 23 and 24 illustrated, in which case the outlet would be centrally disposed. The function of the crop-spraying apparatus as described above is as follows:

with means of propulsion 17 set in motion, the gear 18 revolves in one direction only, and continuously.

Motion is passed on via rod 19 and its two hinge-pins to gear 20, to convert rotary into back-and-forth movement as arrowed in fig. 2. This back and forth movement is passed on to gears 15 and 16, causing nozzles 12 and 13 to turn therewith as one, moving through the wide arc aforedescribed.

Gear 18 also sets up motion in gear 20' which in turn will drive rod 21, and this imparts the back-and-fourth movement to drive-disc 16' which, being integral with nozzle 14, describes the tighter arc as aforedescribed.

Since the jet thrown by nozzle 14 issues in approximately the same vertical plane as that of jets thrown by nozzles 12 and 13, it follows that spray will be administered therefrom over a central, but decidedly more limited area than that delivered from the latter two.

This being the case, the strip of land covered by jets from nozzles 12 and 13 as the tractor moves forward, will be covered at the centre by the further spray from nozzle 14, obtaining the uniform coverage desired in administering the weed-killer, or whatever.

To explain more fully, the two jets delivered by nozzles 12 and 13 are not slow-turning and uniformly swept, — but rather, develop from the "standstill" one has at points of inversion of said back-and-forth movement, to the considerable speed — say, 200 km/h — at centre of the spray-arc, down to zero once again at inversion. Thus, given the build up of angular velocity at centre of the arc, less of the spray will in fact fall down the corresponding central path travelled by the tractor, and it is this difference in quantity of the liquid actually administered that the branched V-nozzle 14 makes up, since the branches thereof 23 and 24 are symmetrically disposed, and what is more, travel back-and-forth through a smaller arc and at greater frequency than nozzles 12 and 13.

The fact of incorporating the three control cocks 3, 4 and 5 will also prove advantageous in certain instances, since shutting-off one or more of these will create a different spray pattern.

If the cock 5 were to be left open by itself, for example, its corresponding nozzle 14 would be the only one in operation, and a relatively tight strip of land could thus be sprayed.

Likewise, if it were wished to lower the intensity of the spray, cock 3 could be closed off, whilst cocks 4 and 5 would be left open.

The option also exists of mounting nozzle 14 so as to pass through the sleeve 32 about which gear 20 is made to turn, thus driven by the latter and caused to swing back and forth at the same frequency as the remaining two nozzles. Whilst such an arrangement would certainly offer economies in construction, efficiency in operation would be down-graded with respect to the preferred embodiment described and illustrated.

**Claims**

1. Crop-spraying apparatus incorporating main nozzles (12, 13) actuated with swinging motions about a vertical axis and arranged to jointly define a wide arc, characterised in that there is at least one auxiliary nozzle (14) swinging about a vertical axis and designed to define a more central and tighter arc than that of said wide arc.

2. Apparatus as in claim 1, characterised in that the auxiliary nozzle (14) comprises two branched outlets (23, 24) set apart at a given angle within a horizontal plane.

3. Apparatus as in claim 1 characterised by means causing said auxiliary nozzle to swing back and fourth at a greater frequency than that of said main nozzles.

4. Apparatus as in claim 1 characterised in that said auxiliary nozzle swings back and fourth within a horizontal plane disposed beneath horizontal planes within which main nozzles are caused to move.

5. Apparatus in claim 1 characterised in that each said nozzle is fed from a respective flexible hose in receipt of liquid from a common manifold (2), such flexible hoses being maintained parallel by a rigid stay (27) located between the main body of the apparatus and manifold (2).

6. Apparatus as in claim 5 characterised in that a control cock (3, 4, 5) for the purpose is fitted to each manifold outlet for controlling the flow of liquid to the nozzles (12, 13, 14) the control cocks (3, 4, 5) can be shut off and opened independently, permitting flow to all lines or one line only, or any combination such as may be wished.

7. Apparatus as in claim 1 characterised in that the apparatus comprises a revolving gear (18) turned by the apparatus' means of propulsion and transmitting motion by rod (19) which imparts back-and-fourth movement to a further gear (20), this in its turn transmitting said movement via other gears to main nozzles (12, 13); and in that the same gear (18) transmits such back-and-forth movement to the auxiliary nozzle (14) via further gear (20'), further rod (21) and a lever-drive disc (16').

8. Apparatus as in claim 1 characterised in that it comprises a revolving element (18) turned by the apparatus' means of propulsion and transmitting motion by way of a rod (19) which imparts back-and-forth movement to a gear (20) provided with said auxiliary nozzle (14), the gear (20) in its turn transmitting said movement via other gears to said main nozzles (12, 13).

## Patentansprüche

1. Feldspritze, enthaltend Hauptdüsen (12, 13), die über eine vertikale Achse mit Schwingbewegungen angetrieben werden und so angeordnet sind, dass sie gemeinsam einen weiten Bogen beschreiben, dadurch gekennzeichnet, dass wenigstens eine Hilfsdüse (14) vorgesehen ist, die über eine vertikale Achse schwingt und dazu dient, einen zentraleren und engeren Bogen als den genannten weiten Bogen zu beschreiben.

2. Gerät nach Patentanspruch 1, dadurch gekennzeichnet, dass die Hilfsdüse (14) zwei abgezweigte Austritte (23, 24) enthält, welche innerhalb einer horizontalen Ebene in einem bestimmten Winkel entfernt voneinander angeordnet sind.

3. Gerät nach Patentanspruch 1, dadurch gekennzeichnet, dass es Mittel enthält, welche die genannte Hilfsdüse mit einer grösseren Häufigkeit vor- und zurückschwingen lassen als die genannten Hauptdüsen.

4. Gerät nach Patentanspruch 1, dadurch gekennzeichnet, dass die genannte Hilfsdüse auf einer horizontalen Ebene vor- und zurückschwingt, die unterhalb der horizontalen Ebene angeordnet ist, auf der die Hauptdüsen bewegt werden.

5. Gerät nach Patentanspruch 1, dadurch gekennzeichnet, dass jede der genannten Düsen durch einen flexiblen Schlauch gespeist wird, der die Flüssigkeit aus einer gemeinsamen Sammelleitung (2) erhält, wobei diese flexiblen Schläuche durch einen steifen Bügel (27), der sich zwischen dem Hauptkörper des Gerätes selbst und dessen Sammelleitung (2) befindet, parallel zueinander gehalten werden.

6. Gerät nach Patentanspruch 5, dadurch gekennzeichnet, dass an einem jeden Auslass der Sammelleitung ein Absperrhahn (3, 4, 5) zur Kontrolle der Flüssigkeitszufuhr an die Düsen (12, 13, 14) befestigt ist, wobei die Kontrollhähne (3, 4, 5) unabhängig voneinander geschlossen oder geöffnet werden können und es erlauben, entweder alle Leitungen oder nur eine Leitung zu speisen oder auch jede gewünschte Kombination zu wählen.

7. Gerät nach Patentanspruch 1, dadurch gekennzeichnet, dass es ein sich drehendes Zahnrad (18) enthält, welches durch Antriebsmittel des Gerätes selbst gedreht wird und Bewegung auf eine Stange (19) überträgt, welche einem weitere Zahnrad (20) eine Vor- und Rückwärtsbewegung verleiht, wobei letzteres wiederum bei seiner Umdrehung die genannte Bewegung über andere Zahnräder auf die Hauptdüsen (12, 13) überträgt, und dadurch, dass dasselbe Zahnrad (18) diese Vor- und Rückwärtsbewegung auf die Hilfsdüse (14) überträgt, und zwar über das weitere Zahnrad (20), eine weitere Stange (21) und einen hebelgetriebenen Ring (16').

8. Gerät nach Patentanspruch 1, dadurch gekennzeichnet, dass es ein sich drehendes Element (18) enthält, welches durch Antriebsmittel des Gerätes gedreht wird und Bewegung auf eine Stange (19) überträgt, welche einem Zahnrad (20), das mit der genannten Hilfsdüse (14) verbunden ist, eine Vor- und Rückwärtsbewegung verleiht, wobei das Zahnrad (20) mit seiner Umdrehung die genannte Bewegung über andere Zahnräder auf die genannten Hauptdüsen (12, 13) überträgt.

## Revendications

1. Pulvérisateur pour l'agriculture incorporant des tuyères principales (12, 13) pourvues de mouvement oscillatoire autour d'un axe vertical et ménagées de manière à définir conjointement une ample zone en arc, caractérisé en ce qu'il y a également au moins une tuyère auxiliaire (14) oscillant autour d'un axe vertical et destinée à définir une zone en arc plus centrale et plus étroite par rapport à celle dudit arc plus ample.

2. Pulvérisateur selon la revendication 1, caractérisé en ce que la tuyère auxiliaire (14) comporte deux branches (23, 24) bifurquées de manière à former un angle déterminé dans un plan horizontal.

3. Pulvérisateur selon la revendication 1, caractérisé par des moyens susceptibles de causer l'oscillation en va-et-vient de la tuyère auxiliaire a une fréquence plus élevée que celle desdites tuyères principales.

4. Pulvérisateur selon la revendication 1, caractérisé en ce que ladite tuyère auxiliaire oscille en va-et-vient dans un plan horizontal disposé au-dessous des plans horizontaux dans lesquels a lieu le mouvement desdites tuyères principales.

5. Pulvérisateur selon la revendication 1, caractérisé en ce que chacune desdites tuyères est alimentée par un tuyau flexible respectif qui reçoit le liquide d'un collecteur commun (2), lesdits tuyaux flexibles étant maintenus parallèles par une entretoise rigide située entre le corps principal du pulvérisateur et le collecteur (2).

6. Pulvérisateur selon la revendication 5, caractérisé en ce qu'un robinet de contrôle (3, 4, 5) est adapté à cet effet aux tuyaux de sortie du collecteur en vue de contrôler l'écoulement du liquide aux tuyères (12, 13, 14), les robinets de contrôle (3, 4, 5) pouvant être fermés et ouverts de manière indépendante, ce qui permet au liquide de s'écouler tant dans toutes les canalisations que dans une seule canalisation ou selon toute combinaison désirée.

7. Pulvérisateur selon la revendication 1, caractérisé en ce que ledit pulvérisateur comporte un engrenage à rotation (18) qui est actionné par les moyens de propulsion du pulvérisateur et qui transmet le mouvement à travers une bielle (19) imprimant un mouvement en va-et-vient à un autre engrenage (20), ce dernier à son tour transmettant ledit mouvement à travers d'autres engrenages aux tuyères principales (12, 13); et en ce que le même engrenage (18) transmet ledit mouvement en va-et-vient à la tuyère auxiliaire (14) à travers un autre engrenage (20'), une autre bielle (21) et un disque actionné par un levier (16').

8. Pulvérisateur selon la revendication 1, caractérisé en ce qu'il comporte un élément à rotation (18) actionné par les moyens de propulsion du pulvérisateur et transmettant le mouvement à travers une bielle (19) qui imprime un mouvement en va-et-vient à un engrenage (20) solidaire de ladite tuyère auxiliaire (14), l'engrenage (20) à son tour transmettant ledit mouvement à travers d'autres engrenages auxdites tuyères principales (12, 13).

Fig.1

Fig.3

Fig.2

Fig.4